# EUROPEAN PATENT APPLICATION

(11) **EP 4 395 051 A2**
(43) Date of publication of application: **03.07.2024**
(21) Application number: 23216946.6
(22) Date of filing: 15.12.2023
(51) Int. Cl.: H01M 50/533, H01M 50/536

(54) **PIN STRUCTURE AND BATTERY CELL ASSEMBLY**

(30) Priority: 30.12.2022 CN 202223595177 U; 25.08.2023 CN 202322305080 U
(71) Applicant: AESC Japan Ltd., Yokohama-Shi, Kanagawa 220-0012 (JP)
(72) Inventor: ZHANG, Jie, Jiangyin City, Wuxi City, 214443 (CN); LU, Tianqi, Jiangyin City, Wuxi City, 214443 (CN)
(74) Representative: Becker, Eberhard

(57) **Abstract**

Disclosed in the embodiments of the disclosure are a pin structure and a battery cell assembly, including a tab guide portion (100) and a pole welding portion (200) connected to each other, wherein the tab guide portion (100) is provided to be connected to the tab (401), and the pole welding portion (200) is provided to be connected to the electrode terminal (501). The tab guide portion (100) and the pole welding portion (200) are arranged with an angle formed therebetween. The tab guide portion (100) includes a pier thinning area (130) and a non-pier thinning area (120), the pier thinning area (130) is subjected to a pier thinning processing, and the pier thinning area (130) is disposed in a symmetrical manner along the center line (100a) of the tab guide portion (100).

## Description

### BACKGROUND

### Technical Field

Embodiments of the present disclosure relate to the field of battery technology, and in particular to a pin structure and a battery cell assembly.

### Description of Related Art

A battery cell structure has positive and negative electrode pins, which are configured to form electrical connections with positive and negative electrode tabs of a battery cell. A single pin includes a tab guide portion and a pole welding portion connected to each other, wherein the tab guide portion is provided to be connected with the tab, and the pole welding portion is provided to be connected to an electrode terminal. Since the tab guide portion and the pole welding portion of the pin have to be bent in order to extend in different directions, it is not likely for the pin itself to be thick in size. When the thickness of the pin is thin, the strength of the pin is low and support capacity thereof is insufficient.

### SUMMARY

The technical problem to be solved by the embodiments of the present disclosure is to provide a pin structure and a battery cell assembly to overcome the defects of the current technology.

Embodiments of the present disclosure solve the above technical problems through the following technical solutions:

A pin structure includes a tab guide portion and a pole welding portion connected to each other, wherein the tab guide portion is provided to be connected to the tab, and the pole welding portion is provided to be connected to the electrode terminal. The tab guide portion and the pole welding portion are arranged with an angle formed therebetween. The tab guide portion includes a pier thinning area and a non-pier thinning area, the pier thinning area is subjected to a pier thinning processing, and the pier thinning area is disposed in a symmetrical manner along the center line of the tab guide portion.

In this solution, by thinning the pier thinning area, it is possible to reduce the thickness of the material of the pin in the pier thinning area, and enhance the hardness of the material of the pin in the pier thinning area, so as to ensure the overall strength of the pin structure under the condition that the thickness of the pin structure is controlled. Moreover, by arranging the pier thinning area in a symmetrical manner along the center line, it is possible to increase the strength of the whole pin structure, thereby enhancing the supporting force of the pin structure.

Preferably, a projection of the tab on a surface of the tab guide portion is located in the pier thinning area.

By arranging the projection of the tab on a surface of the tab guide portion in the pier thinning area, it is possible to accommodate the tab by using the gap between the pier thinning area relative to the non-pier thinning area, so as to effectively reduce the size of the tab protruding from the surface of the pin structure. In this way, the overall thickness of the pin structure for the tabs to be connected is relatively thin after the connection is completed, thus saving space.

Preferably, a ratio of the thickness of the pier thinning area to the thickness of the non-pier thinning area is greater than or equal to 1/8 and less than 1.

The thickness of the pier thinning area for the tab to be welded to on the pin structure may be controlled through a ratio parameter. On the premise of satisfying the basic functions of the pin structure, it is possible for the first area to effectively accommodate the tab, and also the structural strength problem caused by thin thickness of the pier thinning area may be avoided.

Preferably, the thicknesses of the pier thinning area and the tab are less than or equal to the thickness of the non-pier thinning area.

By using the recess formed by the pier thinning area relative to the non-pier thinning area to accommodate the tab, the sum of the thicknesses of the pier thinning area and the tab is further reduced to be less than or equal to the thickness of the non-pier thinning area. In this way, after the connection of the pin structure for the tab to be connected is completed, the tab will not protrude from the surface of the non-pier thinning area of the pin structure.

When the sum of the thickness of the pier thinning area and the thickness of the tab is equal to the thickness of the non-pier thinning area, it is also possible to effectively avoid the problem of poor overcurrent capability of the pin structure caused by the thin thickness of the pier thinning area.

Preferably, after two of the tabs are respectively bent along two opposite sides of the pin structure and extended toward each other, they are welded on a surface of the tab guide portion away from the electrode assembly.

By bending two of the tabs on two opposite sides of the pin structure and welding them to the surface of the tab guide portion away from the electrode assembly, the welding of the tab relative to the tab guide portion will not be blocked by the electrode assembly, which makes implementation of welding process to be easily carried out.

Preferably, two of the tabs form a relatively overlapped and intersecting area after they are bent, and the thickness of the pier thinning area corresponding to the intersecting area is less than the thicknesses of other areas of the pier thinning area.

By specifically reducing the thickness of the overlapped and intersecting area of the pier thinning area of the pin structure relative to the tab, it is possible to use the pier thinning area to accommodate the tabs, as well as prevent the overall thickness of the pin structure from increasing after being connected to the tab.

Preferably, a first stepped structure is formed by the relatively overlapped and intersecting area of two of the tabs, and a second stepped structure is formed by the non-overlapped areas of two of the tabs. There is a gap between the first stepped structure and the second stepped structure, and a surface of the pier thinning area for accommodating the tab is formed with a gap structure matching the first stepped structure and the second stepped structure.

Preferably, the tab guide portion includes a welding area for welding with the tab of the electrode assembly, and the pier thinning area is at least partially located within the welding area.

By providing a welding area in the pier thinning area to connect the tab through welding, and using the pier thinning area to accommodate the tab, it is possible to effectively overcome the current problem that the overall thickness is increased due to accommodation of excessively long tabs.

Preferably, welding marks are distributed on a surface of the welding area, and the tab guide portion is connected to the tab through the welding marks.

Preferably, a projection of the tab in the welding area is located within the pier thinning area.

In this solution, by arranging the pier thinning area in the welding area, it is possible for the tab to reasonably utilize the space of the pier thinning area so as to reduce the use of external space. In this way, reasonable utilization of space may be achieved.

Preferably, a ratio of the thickness of the welding area to a thickness of the non-pier thinning area is greater than or equal to 1/8 and less than 1.

The thickness of the welding area for the tab to be welded to on the pin structure may be controlled through a ratio parameter. On the premise of satisfying the basic functions of the pin structure, it is possible for the first area to effectively accommodate the tab, and also the structural strength problem caused by thin thickness of the welding area may be avoided.

Preferably, the thicknesses of the welding area and the tab are less than or equal to the thickness of the non-pier thinning area.

In this solution, it is possible for the tab to utilize the pier thinning area in a reasonable manner without occupying additional external space, so as to further improve space utilization. As for the solution where the sum of the thickness of the welding area and the tab is equal to the thickness of the non-pier thinning area, on basis that the tab may be accommodated in the welding area within the pier thinning area, it is possible to effectively prevent the poor overcurrent capability problem caused by thin thickness of the pin structure in the welding area.

Preferably, the thickness of the welding area becomes thinner as the thickness of the welded tab increases.

In the situation where the thickness of the welded tab changes (for example, the thicknesses of different areas of a single tab are different, or multiple tabs with different lengths overlap each other, resulting in different overall thickness of the tab), by making the thickness of the welding area to reduce along with increase in the thickness of the tab, the thickness of the welding area is reduced specifically to thin the thicker part of the tab on the premise that the overall thickness of the pier thinning area in the welding area is ensured,. In this way, it is possible to ensure that the overall thickness will not be too thick after the tab is welded.

Preferably, the welding area is symmetrically distributed on both sides of the non-pier thinning area.

In this solution, the tabs may be connected to the welding area from both sides to facilitate welding of the tabs.

Preferably, the tab is led out from the electrode assembly, when the pier thinning area is disposed on a surface of the tab guide portion facing away from the electrode assembly, and the tab is welded to the tab guide portion at the pier thinning area, when the pier thinning area is disposed on a surface of the tab guide portion facing the electrode assembly, the tab is welded to the tab guide portion at the pier thinning area, and a hardness of a material of the pier thinning area is greater than a hardness of a material of the non-pier thinning area.

By welding the tab on a surface of the pin structure facing away from the electrode assembly, it is possible to prevent the electrode assembly from hindering implementation of the welding process, and the welding process may be easily carried out.

As for the pier thinning area with relatively thin thickness, by increasing the hardness of material in this area, it is possible to effectively reinforce the overall strength of the pin structure, so that the strength and weight reduction of the pin structure are both taken into consideration.

A battery cell assembly, including: a housing; an electrode assembly, provided in the housing, wherein the electrode assembly includes an electrode assembly body and a tab extending from the electrode assembly body; a top cover assembly, the top cover assembly including a top cover body and an electrode terminal provided on the top cover body, and the top cover body being connected to the housing; the pin structure, a tab guide portion in the pin structure being connected to the tab, and the pole welding portion in the pin structure being connected to the electrode terminal.

In this solution, the strength of the pin structure is improved, the pin structure has a better supporting force, and the pin structure is not easily damaged. The stability and service life of the battery cell assembly using the above-mentioned pin structure are improved.

Preferably, the tab is welded to the pier thinning area on a surface of the tab guide portion away from the electrode assembly, and when the number of the tab protruding from the electrode assembly is two. After two of the tabs are respectively bent along two opposite sides of the pin structure and extended toward each other, they are welded in the pier thinning area of a surface of the tab guide portion away from the electrode assembly, and the projection of the tab on the surface of the pin structure is completely located within the pier thinning area.

Such structural arrangement exposes the welding area to facilitate the welding process of the tabs and the pin structure.

The pier thinning area is provided to accommodate the tabs to avoid excessive thickness after the pin structure and tabs are welded.

Preferably, when two of the tabs form a relatively overlapped and intersecting area after they are bent, the thickness of the pier thinning area corresponding to the intersecting area is less than the thicknesses of other areas of the pier thinning area.

A specific area of the pier thinning area corresponding to the intersecting area of the tab is thinned so as to use the pier thinning area to accommodate the tab, and ensure the overall strength of the pin structure as well as taking into account the current carrying capacity.

The positive advantageous effects of the embodiments of the present disclosure are:

In this solution, the pier thinning area is thinned to reduce the thickness of the material of the pins in the pier thinning area, and increase the hardness of the material of the pins in the pier thinning area, thereby ensuring the overall strength of the pin structure in the condition that the thickness of the pin structure is controlled. Moreover, the pier thinning area is set symmetrically along the center line, which may further improve the strength of the entire pin structure and enhance the supporting force of the pin structure.

### BRIEF DESCRIPTION OF THE DRAWINGS

FIG. 1 is a schematic view illustrating a pin structure of the first embodiment of the present disclosure.
FIG. 2 is a schematic view illustrating a pin structure of the second embodiment of the present disclosure.
FIG. 3 is a schematic structural view illustrating a tab guide portion of the pin structure of the second embodiment of the present disclosure.
FIG. 4 is a schematic side view of the pin structure of the second embodiment of the present disclosure.
FIG. 5 is an enlarged structural view illustrating position B in an embodiment of FIG. 4 of the present disclosure.
FIG. 6 is an enlarged structural view illustrating position C in the embodiment of FIG. 4 of the present disclosure.
FIG. 7 is a schematic view (1) illustrating a positional relationship between the pin structure, the electrode assembly and the top cover assembly in the third embodiment of the present disclosure.
FIG. 8 is a schematic view (2) illustrating a positional relationship between the pin structure, the electrode assembly and the top cover assembly in the third embodiment of the present disclosure.
FIG. 9 is a schematic view (1) illustrating a positional relationship between the pin structure and the top cover assembly in the third embodiment of the present disclosure.
FIG. 10 is a schematic view (2) illustrating a positional relationship between the pin structure and the top cover assembly in the third embodiment of the present disclosure.
FIG. 11A is a schematic view (1) illustrating a thickness relationship between the pier thinning area and the non-pier thinning area of the pin structure in the third embodiment of the present disclosure.
FIG. 11B is a schematic view (2) illustrating a thickness relationship between the pier thinning area and the non-pier thinning area of the pin structure in the third embodiment of the present disclosure.
FIG. 12 is a schematic structural view of the electrode assembly at the tab in the fourth embodiment of the present disclosure.
FIG. 13 is a schematic structural view of the pin structure in the fourth embodiment of the present disclosure.

### DESCRIPTION OF THE EMBODIMENTS

Preferred embodiments are provided below with reference to drawings to describe the embodiments of the present disclosure more clearly and comprehensively.

### First Embodiment

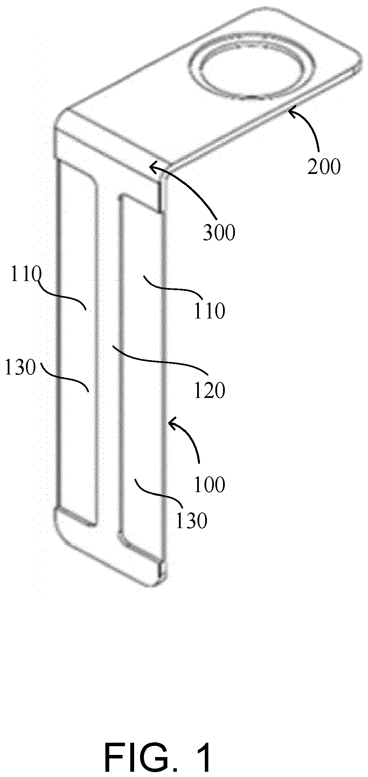

As shown in FIG. 1, the present embodiment provides a pin structure, which includes a tab guide portion 100. The tab guide portion 100 includes a pier thinning area 130 and a non-pier thinning area 120. The pier thinning area 130 is subjected to a pier thinning processing, and the pier thinning area 130 is disposed in a symmetrical manner along the center line of the tab guide portion. By thinning the pier thinning area 130, it is possible to compress the pier thinning area 130. When the density of the pier thinning area 130 is increased, the strength of the pier thinning area 130 is reinforced. Moreover, by arranging the pier thinning area 130 in a symmetrical manner along the center line, it is possible to increase the strength of the whole pin structure, thereby enhancing the supporting force of the pin structure.

In this embodiment, the tab guide portion 100 includes a welding area 110 for welding with the tab of the battery cell, and the pier thinning area 130 is located in the welding area 110. By arranging the pier thinning area 130 in the welding area 110, it is possible for the tab to reasonably utilize the space of the pier thinning area 130 so as to reduce the use of external space. In this way, reasonable utilization of space may be achieved.

Specifically, a projection of the tab in the welding area 110 is located within the pier thinning area 130. The tab may be completely located within the pier thinning area 130, making utilization of space more reasonable and further improving utilization of space.

In this embodiment, a thickness of the welding area 110 and the tab is less than the thickness of the non-pier thinning area 120. It is possible for the tab to reasonably utilize the space of the pier thinning area 130 without occupying additional external space, so as to further improve space utilization.

In other embodiments, a thickness of the welding area 110 and the tab may also be equal to the thickness of the non-pier thinning area 120.

In this embodiment, the welding areas 110 are symmetrically distributed on both sides of the non-pier thinning area 120. The front and rear ends and the middle area of the tab guide portion 100 are non-pier thinning areas 120. The welding areas 110 are distributed on both sides of the non-pier thinning area 120 in the middle, and are wrapped by the non-pier thinning areas 120 at the front and rear ends. The tabs may be connected to the welding area 110 from both sides, thereby facilitating welding of the tabs.

Certainly, in other embodiments, the non-pier thinning area 120 may be provided only in the middle area of the tab guide portion 100, and the pier thinning areas 130 may be provided on both sides of the non-pier thinning area 120.

Specifically, in this embodiment, the welding area 110 coincides with the pier thinning area 130, so that the tab may be completely located within the pier thinning area 130.

Certainly, in other embodiments, the projection of the tab in the welding area 110 may also be partially located within the pier thinning area 130, that is, the pier thinning area 130 may also be smaller than the welding area 110.

In this embodiment, the pin structure further includes a pole welding portion 200, and the pole welding portion 200 and the tab guide portion 100 form an arc transition 300. By arranging the arc transition 300 between the pole welding portion 200 and the tab guide portion 100, it is possible to prevent concentration of stress.

In the present embodiment, the thickness of the pier thinning area 130 is less than the thickness of the non-pier thinning area 120, and the density of the pier thinning area 130 is greater than the density of the non-pier thinning area 120. The thickness of pier thinning area130 is less than the thickness of non-pier thinning area120. In this way, it is possible to save a space for the tab and effectively improve utilization of space. The density of pier thinning area 130 is greater than the density of non-pier thinning area 120, which improves the strength of the pier thinning area 130.

This embodiment further provides a battery cell assembly, including: a housing; an electrode assembly, arranged in the housing, and the electrode assembly including an electrode assembly body and a tab extending from the electrode assembly body; a top cover assembly, the top cover assembly including a top cover body and an electrode terminal provided on the top cover body, and the top cover body being connected to the housing; and the pin structure described above.

The strength of the pin structure is improved, the pin structure has a better supporting force, and the pin structure is not easily damaged. The stability and service life of the battery cell assembly using the above-mentioned pin structure are improved.

### Second Embodiment

The solution of this embodiment is basically the same as that of the first embodiment, and the difference lies in that:

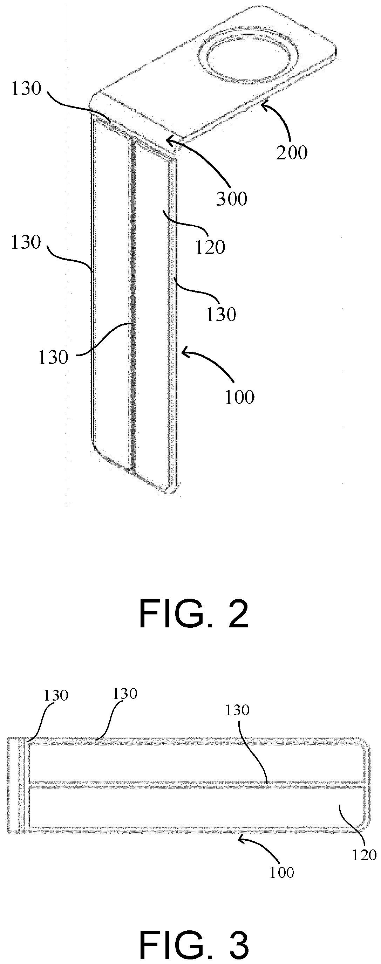

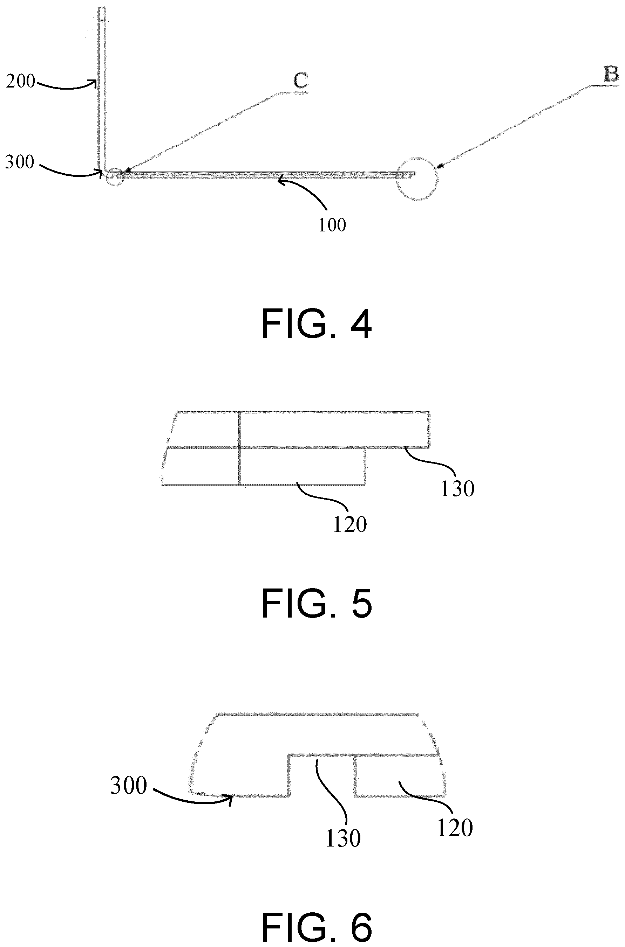

As shown in FIG. 2 to FIG. 6, in this embodiment, the pier thinning area 130 is provided at the outer periphery of the tab guide portion 100. The pier thinning area 130 is located at the outer periphery of the tab guide portion 100. The strength of the outer periphery of the tab guide portion 100 is significantly improved, thereby reinforcing the strength of the pin structure and enhancing the supporting force of the pin structure.

As shown in FIG. 2 and FIG. 3, in this embodiment, the pier thinning area 130 is further provided in the middle area of the tab guide portion 100 and extends to the outer periphery of the tab guide portion 100 along the center line. By arranging the pier thinning area 130 in the middle area and extending to the outer periphery of the tab guide portion 100, the strength of the middle area of the tab guide portion 100 is improved. Together with the pier thinning area 130 at the outer periphery, it helps to further increase the strength of the pin structure.

Of course, in other embodiments, the pier thinning area 130 may not be provided in the middle area of the tab guide portion 100.

As shown in FIG. 2, FIG. 4 and FIG. 6, in this embodiment, the tab guide portion 100 is provided with a pier thinning area 130 near the arc transition 300. By arranging the pier thinning area 130 at a position where the tab guide portion 100 is close to the arc transition 300, the strength of the tab guide portion 100 at a position close to the arc transition 300 is reinforced, and therefore the tab guide portion 100 is not easily deformed relative to the pole welding portion 200.

### Third Embodiment

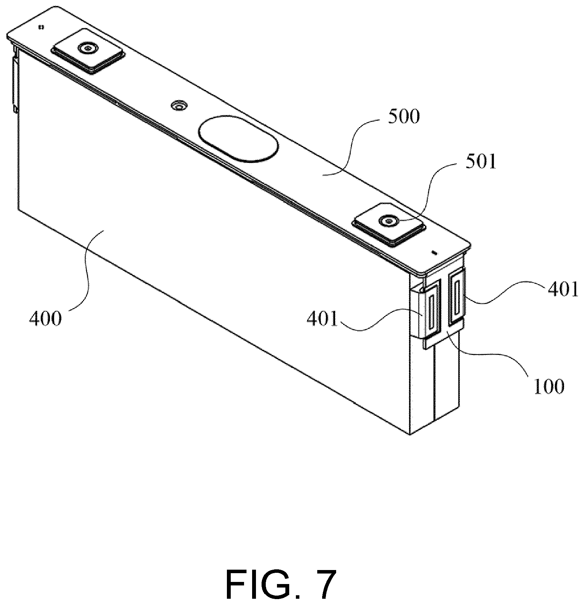

As shown in FIG. 7, it is a specific structural schematic view illustrating the battery cell assembly provided in the first embodiment, which shows the specific positional relationship and arrangement of the pin structure, the electrode assembly 400 and the top cover assembly 500, wherein the pin structure may adopt the pin structure provided in the first embodiment or the second embodiment.

Specifically, the electrode assembly 400 includes an electrode assembly body and a tab 401 extending from the electrode assembly body, and the top cover assembly 500 includes a top cover body and an electrode terminal 501 provided on the top cover body. The tab guide portion 100 in the pin structure provided in the first embodiment or the second embodiment is connected to the tab 401, and the pole welding portion 200 is connected to the electrode terminal 501.

Specifically, the tab guide portion 100 and the pole welding portion 200 provided in the first embodiment or the second embodiment are arranged with an angle of 90° therebetween, so as to realize direction transmission of power supply between the tab 401 and the electrode terminal 501. Certainly, in other embodiments, the tab guide portion 100 and the pole welding portion 200 may also be bent at other angles to achieve the same purpose of delivering power supply.

This embodiment takes the pin structure provided in the first embodiment as an example to specifically describe how the pin structure provided in the first embodiment is connected to the tab of the electrode assembly 400 through the pier thinning area 130 of the pin structure. In the pin structure of the first embodiment, since the pier thinning area 130 is disposed in the welding area 110, that is, the welding area 110 for the tab 401 to be welded entirely belongs to the relatively thinned range of the pier thinning area 130, and the overall thickness of the welding area 110 is relatively thin, after the tab 401 is welded in the welding area 110, the relatively thinned area may be utilized to accommodate the tab 401.

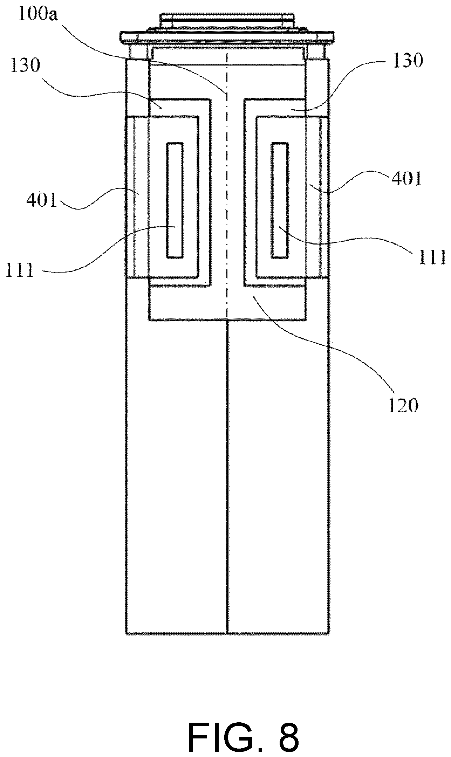

As specifically shown in FIG. 8, the pier thinning area 130 of the tab guide portion 100 of the pin structure is thinned relative to the non-pier thinning area 120, and the pier thinning area 130 is arranged in a symmetrical manner along the center line 100a of the tab guide portion 100. By thinning the pier thinning area 130, it is possible to reduce the thickness of the material of the pin in the pier thinning area 130 and improve the hardness of the material of the pin in the pier thinning area 130, thereby ensuring the overall strength of the pin structure under the condition that the thickness of the pin structure is controlled. Moreover, by arranging the pier thinning area 130 in a symmetrical manner along the center line 100a, it is possible to increase the strength of the whole pin structure, thereby enhancing the supporting force of the pin structure.

When the pin structure is processed through a pier thinning process including a cold heading process to form the pier thinning area 130, the hardness of the material of the pier thinning area 130 may be greater than the hardness of the material of the non-pier thinning area 120. In this way, by increasing the hardness of material in this area, it is possible to effectively reinforce the overall strength of the pin structure, so that the strength and weight reduction of the pin structure are both taken into consideration.

As can be seen from FIG. 7, corresponding to a single pin structure, the electrode assembly 400 has two tabs 401 that need to be welded thereto. The two tabs 401 protrude from both sides of the pin structure and are respectively bent at two opposite sides of the pin structure. After the two tabs 401 extend toward each other, they are welded in the pier thinning area 130 on a surface of the tab guide portion 100 away from the electrode assembly 400. In the first embodiment, the two pier thinning areas 130 provided by the tab guide portion 100 of the pin structure exactly correspond to the two bent tabs 401, so that the projections of the bent tabs 401 on the surface of the pin structure are completely located within the pier thinning area 130. By utilizing the gap between the pier thinning area 130 and the non-pier thinning area 120 to accommodate the tab 401, the size of the tab 401 protruding from the surface of the pin structure may be effectively reduced, so that the overall thickness of the pin structure for the tab 401 to be connected is relatively thin after connection is completed.

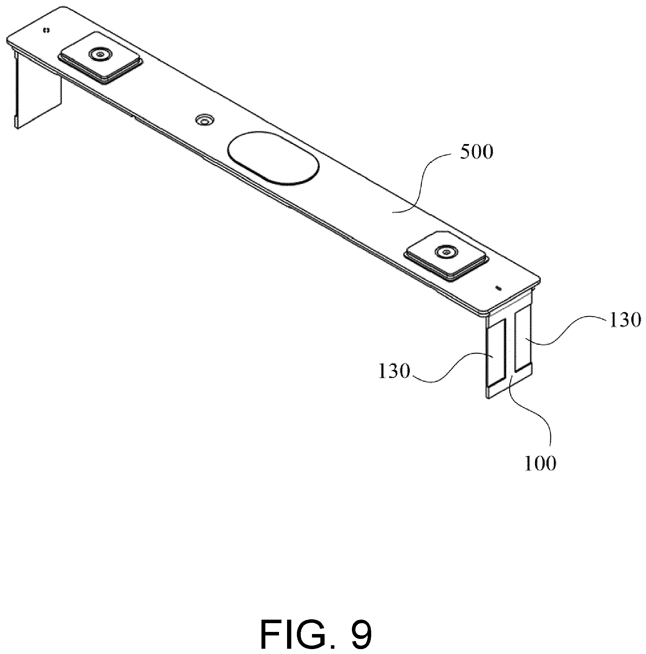

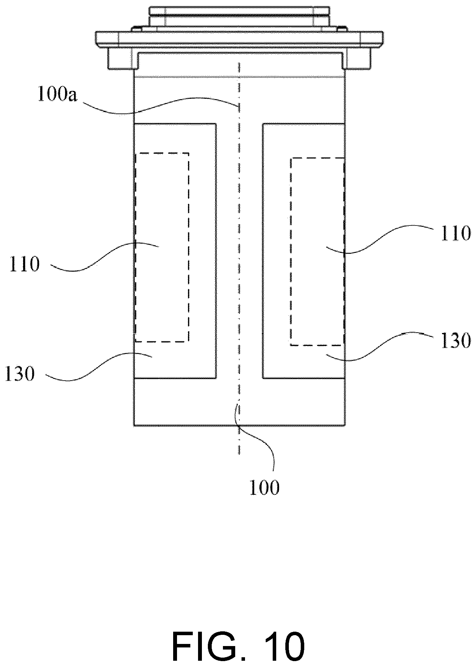

As shown in FIG. 9 and FIG. 10, the tab 401 is relatively welded through the welding area 110 within the pier thinning area 130. Welding marks 111 are distributed on the surface of the welding area 110 so that the tab guide portion 100 may be connected to the tab 401 through the welding marks 111. In this embodiment, it can be seen from FIG. 7 and FIG. 8 that only one welding mark 111 is provided in a single welding area 110 for the tab 401 to be welded, and the welding mark 111 extends in a vertical direction. Of course, in other embodiments, there may be multiple welding marks 111 which are relatively parallel to each other and evenly distributed in the welding area 110. By arranging a plurality of evenly distributed welding marks 111 to realize the welding and connection with the tab 401, the connection strength may be improved.

Since the pin structure used in this embodiment is derived from the pin structure provided in the first embodiment, the thicknesses of the welding area 110 of the pin structure and the tab (i.e., the sum of the thicknesses of the welding area 110 and the tab) is less than that of the non-pier thinning area 120, so it is possible to fully accommodate the tab.

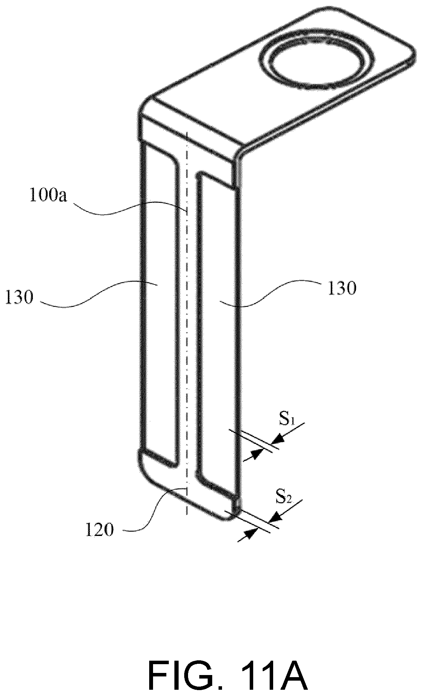

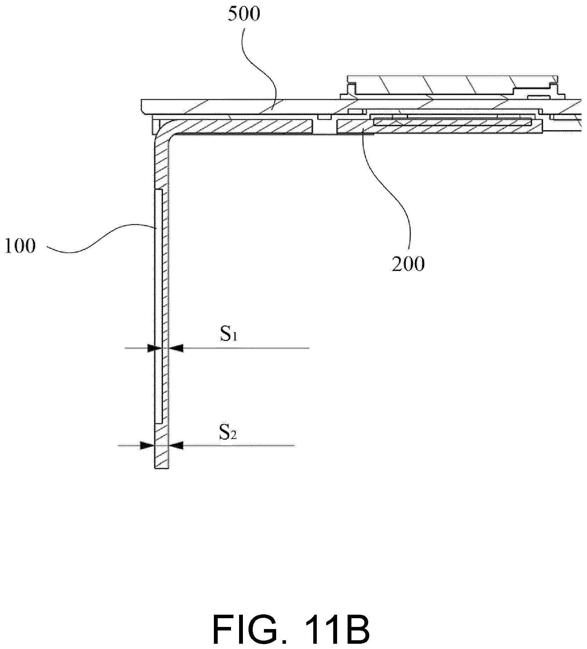

Based on the thickness relationship provided in the first embodiment, the preferred dimensional relationship between the thickness of the pier thinning area 130 having the welding area 110, the thickness of the non-pier thinning area 120 and the thickness of the tab is further discussed here. Please see FIG. 11A and FIG. 11B, which show the thickness Si of the pier thinning area 130 and the thickness S₂ of the non-pier thinning area 120 of the pin structure. First, in order to ensure that the tab is partially accommodated, the thickness Si of the pier thinning area 130 is less than the thickness S₂ of the non-pier thinning area 120 to form an inward recess at the pier thinning area 130. Further, by welding the tab 401 at the welding area 110 within the pier thinning area 130 to utilize the formed recess to accommodate the tab 401, it is possible that the overall thickness of the pin structure for the tab 401 to be connected is relatively thin after the welding and connection are completed.

Furthermore, the thickness Si of the pier thinning area 130 plus the thickness of the tab 401 should be less than or equal to the thickness S₂ of the non-pier thinning area 120, so as to make the sum of the thicknesses of the pier thinning area 130 and the tab 401 to be less than or equal to the thickness of the non-pier thinning area 120 after using the recess formed by the pier thinning area 130 relative to the non-pier thinning area 120 to accommodate the tab 401. In this way, after connection of the pin structure for the tab 401 to be connected is completed, the tab 401 will not protrude from the surface of the non-pier thinning area 120 of the pin structure.

The solution in which the thickness Si of the pier thinning area 130 plus the thickness of the tab 401 is equal to the thickness S₂ of the non-pier thinning area 120 is relatively better, because such structural configuration not only makes it possible to control the overall thickness, but also effectively prevents poor current carrying capacity of the pin structure caused by thin thickness of the pier thinning area 130.

It should be noted that in this embodiment, the thickness of the tab 401 does not change from the extension direction, and therefore the thickness of the pier thinning area 130 does not change either. However, in other embodiments, if the tab 401 has a multi-layer structure and so on and the thickness of the tab 401 is changed from the extension direction thereof, for example, the thickness becomes thinner gradually or thicker gradually, in which case, it is preferable that the thickness Si of the pier thinning area 130 should also gradually become thinner or gradually become thicker corresponding to the change in the thickness of the tab 401, so as to fully accommodate the tab 401 and prevent the tab 401 from protruding from the surface of the pin structure.

The ratio relationship between the thickness Si of the pier thinning area 130 and the thickness S₂ of the non-pier thinning area 120 is preferably controlled to be greater than or equal to 1/8 and less than 1. In the pin structure, the ratio parameter is provided to control the thickness of the pier thinning area 130 including the welding area 110 for the tab 401 to be welded, so that there is a ratio relationship between the thickness of the pier thinning area 130 and the thickness of the non-pier thinning area 120. On the premise of satisfying the basic functions of the pin structure, the pier thinning design standards are more normalized to avoid structural strength problems caused by the thin thickness of the welding area 110. By controlling the lower limit of the ratio relationship between the thickness of the pier thinning area 130 and the thickness of the non-pier thinning area 120 at 1/8, it is possible to effectively prevent insufficiency of the welding area 110 for the tab 401 to be welded, thereby preventing risks of insufficient current carrying capacity and poor strength of the welding mark 111.

In this embodiment, since the pin structure provided in the first embodiment is adopted, the pier thinning area 130 thereof is provided on a surface of the tab guide portion 100 facing away from the electrode assembly 400. Therefore, with such arrangement, after the tab 401 is led out from the electrode assembly 400, the tab 401 is bent at the surface of the tab guide portion 100 facing away from the electrode assembly 400 and welded relative to the pin structure.

Of course, in other embodiments, there are also cases where the pier thinning area 130 of the pin structure is disposed on the surface of the tab guide portion 100 facing the electrode assembly 400. In this arrangement, after the tab 401 is led out from the electrode assembly 400, the tab 401 is bent at the surface of the tab guide portion 100 facing the electrode assembly 400 and welded relative to the pin structure. That is, no matter which surface of the pin structure the pier thinning area 130 is disposed on, a relatively preferred solution is to bend and weld the pins within the pier thinning area 130 on the surface to utilize the recess formed by the pier thinning area 130 to accommodate the tab 401.

In addition, although the present embodiments adopts the pin structure provided in the first embodiment, it is possible to adopt the pin structure provided in the second embodiment in other cases. The pier thinning area 130 formed on the surface of the pin structure in the second embodiment is utilized to accommodate the tab 401 protruding from the electrode assembly 400, so as to prevent the tab 401 from protruding from the surface of the pin structure.

### Fourth Embodiment

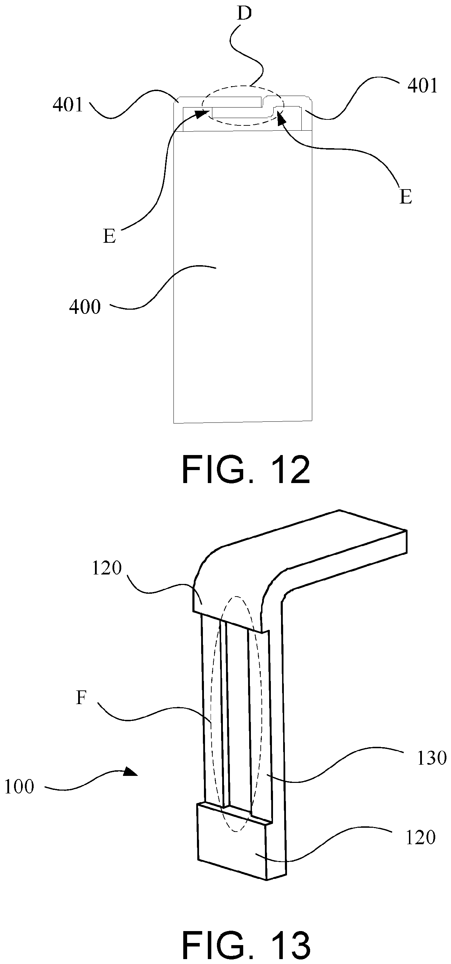

This embodiment further provides a pin structure and a battery cell assembly including the same. The pin structure and the battery cell assembly are substantially the same as those provided in the first embodiment, the second embodiment, or the third embodiment. The main differences are that, in the present embodiment, as shown in FIG. 12, two tabs 401 are respectively bent along two opposite sides of the pin structure. Since the length of the two tabs 401 is relatively long, they have a relatively overlapped and intersected area D after bending, which causes the thickness of the tabs 401 to be different, and the overall thickness of the intersected area D is thicker. In order to correspondingly accommodate this type of tab 401, as shown in FIG. 13, the thickness of the pin structure at the pier thinning area 130 corresponding to the intersecting area D is less than the thicknesses of other areas of the pier thinning area 130. By specifically reducing the thickness of the overlapped and intersected area of the pier thinning area 130 of the pin structure relative to the tab 401, it is possible to utilize the pier thinning area 130 to accommodate the tab 401, and prevent the overall thickness of the pin structure from increasing after the tab 401 is connected.

Specifically, in this embodiment, as shown in FIG. 12, a first stepped structure is formed by the relatively overlapped and intersected area D of the two tabs 401, and a second stepped structure is formed by the non-overlapped area. There is a gap E between the first stepped structure and the second stepped structure. As shown in FIG. 13, the pin structure is formed with a surface for accommodating the tab 401 at the pier thinning area 130, and the surface is formed with a gap structure F matching the first stepped structure and the second stepped structure. The gap structure F is utilized to accommodate tabs 401 with different thicknesses. In the meantime, the gap structure F is able to ensure that the overall thickness of the pier thinning area 130 is not overly thin to affect the overall strength of the pin structure.

## Claims

1. A pin structure, comprising a tab guide portion (100) and a pole welding portion (200) connected to each other, wherein the tab guide portion (100) is provided to be connected to a tab (401), and the pole welding portion (200) is provided to be connected to an electrode terminal (501), the tab guide portion (100) and the pole welding portion (200) are arranged with an angle formed therebetween, wherein the tab guide portion (100) comprises a pier thinning area (130) and a non-pier thinning area (120), the pier thinning area (130) is subjected to a pier thinning processing, and the pier thinning area (130) is disposed in a symmetrical manner along a center line (100a) of the tab guide portion (100).

2. The pin structure according to claim 1, wherein a projection of the tab (401) on a surface of the tab guide portion (100) is located in the pier thinning area (130).

3. The pin structure according to claim 2, wherein a ratio of a thickness (Si) of the pier thinning area (130) to a thickness (S₂) of the non-pier thinning area (120) is greater than or equal to 1/8 and less than 1.

4. The pin structure according to claim 2, wherein a thickness (Si) of the pier thinning area (130) and a thickness of the tab (401) are less than or equal to a thickness (S₂) of the non-pier thinning area (120).

5. The pin structure according to claim 4, wherein after two of the tabs (401) are respectively bent along two opposite sides of the pin structure and extended toward each other, two of the tabs (401) are welded on a surface of the tab guide portion (100) away from an electrode assembly (400).

6. The pin structure according to claim 5, wherein two of the tabs (401) form a relatively overlapped and intersecting area (D) after two of the tabs (401) are bent, and a thickness (Si) of the pier thinning area (130) corresponding to the intersecting area (D) is less than thicknesses of other areas of the pier thinning area (130).

7. The pin structure according to claim 6, wherein a first stepped structure is formed by the relatively overlapped and intersecting area (D) of two of the tabs (401), and a second stepped structure is formed by the non-overlapped areas of two of the tabs (401), there is a gap (E) between the first stepped structure and the second stepped structure, and a surface of the pier thinning area (130) for accommodating the tab (401) is formed with a gap structure (F) matching the first stepped structure and the second stepped structure.

8. The pin structure according to claim 1, wherein the tab guide portion (100) comprises a welding area (110) for welding with a tab (401) of an electrode assembly, and the pier thinning area (130) is at least partially located within the welding area (110).

9. The pin structure according to claim 8, wherein welding marks (111) are distributed on a surface of the welding area (110), and the tab guide portion (100) is connected to the tab (401) through the welding marks (111).

10. The pin structure according to claim 9, wherein a projection of the tab (401) in the welding area (110) is located within the pier thinning area (130).

11. The pin structure according to claim 10, wherein a ratio of a thickness of the welding area (110) to a thickness (S₂) of the non-pier thinning area (120) is greater than or equal to 1/8 and less than 1.

12. The pin structure according to claim 8, wherein a thickness of the welding area (110) and a thickness of the tab (401) are less than or equal to a thickness (S₂) of the non-pier thinning area (120).

13. The pin structure according to claim 12, wherein the thickness of the welding area (110) becomes thinner as the thickness of the welded tab (401) increases.

14. The pin structure according to claim 8, wherein the welding area (110) is symmetrically distributed on both sides of the non-pier thinning area (120).

15. The pin structure according to claim 1, wherein the tab (401) is led out from an electrode assembly (400),
when the pier thinning area (130) is disposed on a surface of the tab guide portion (100) facing away from the electrode assembly (400), the tab (401) is welded to the tab guide portion (100) at the pier thinning area (130),
when the pier thinning area (130) is disposed on a surface of the tab guide portion (100) facing the electrode assembly (400), the tab (401) is welded to the tab guide portion (100) at the pier thinning area (130), and
a hardness of a material of the pier thinning area (130) is greater than a hardness of a material of the non-pier thinning area (120).

16. A battery cell assembly, comprising:
a housing;
an electrode assembly (400), provided in the housing, wherein the electrode assembly (400) comprises an electrode assembly body and a tab (401) extending from the electrode assembly body;
a top cover assembly (500), the top cover assembly (500) comprising a top cover body and an electrode terminal (501) provided on the top cover body, and the top cover body being connected to the housing;
the pin structure according to any one of claims 1 to 15, the tab guide portion (100) in the pin structure being connected to the tab (401), and the pole welding portion (200) in the pin structure being connected to the electrode terminal (501).

17. The battery cell assembly according to claim 16, wherein the tab (401) is welded to the pier thinning area (130) on the surface of the tab guide portion (100) away from the electrode assembly (400), and
when the number of the tab (401) protruding from the electrode assembly (400) is two, after two of the tabs (401) are respectively bent along two opposite sides of the pin structure and extended toward each other, two of the tabs (401) are welded in the pier thinning area (130) of the surface of the tab guide portion (100) away from the electrode assembly (400), and a projection of the tab (401) on a surface of the pin structure is completely located within the pier thinning area (130); when two of the tabs (401) form the relatively overlapped and intersecting area (D) after two of the tabs (401) are bent, a thickness (Si) of the pier thinning area (130) corresponding to the intersecting area (D) is less than thicknesses of other areas of the pier thinning area (130).
